# EUROPÄISCHE PATENTSCHRIFT

(11) **EP 0 756 770 B1**
(45) Veröffentlichungstag und Bekanntmachung des Hinweises auf die Patenterteilung: **25.03.1998**
(21) Anmeldenummer: 95915877.5
(22) Anmeldetag: 14.04.1995
(51) Int. Cl.: H02G 3/06

(54) **WINKEL-KABELVERSCHRAUBUNG**
ANGLED THREADED CABLE UNION
PASSE-CABLE ANGULAIRE A VIS

(30) Priorität: 16.04.1994 DE 9406382 U
(43) Veröffentlichungstag der Anmeldung: 05.02.1997
(73) Patentinhaber: JACOB GMBH ELEKTROTECHNISCHE FABRIK, 71394 Kernen im Remstal/Württ. (DE)
(72) Erfinder: FEKETITSCH, Herbert, D-73579 Schechingen/Württ (DE)
(74) Vertreter: Wolff, Michael, Dipl.-Phys.
(86) Internationale Anmeldenummer: EP9501409
(87) Internationale Veröffentlichungsnummer: WO9528759

(56) Entgegenhaltungen:
- DE-A- 3 614 198
- DE-U- 9 204 256
- GB-A- 2 253 458

## Beschreibung

Gegenstand der Erfindung ist eine gewinkelte Kabeldurchführung, mit oder ohne Zugentlastung, für elektrotechnische Geräte, also eine sogenannte Winkel-Kabelverschraubung, gemäß Oberbegriff des Anspruchs 1.

Stand der Technik sind 90°-Kabelverschraubungen, die nur zwei Gehäuseabschnitte aufweisen, die entweder starr oder gelenkig miteinander verbunden sind. Bei letzteren, welche Klapp-Winkel heißen, ist ein äußerlich quaderförmiges Gehäuse diagonal in die zwei äußerlich dreieckigen Abschnitte geteilt, die an der Außenecke des Gehäuses ein Scharnier bilden, das die öffnung des Gehäuses um 90° erlaubt, so daß die zwei Bohrungen der beiden Abschnitte zur geraden Kabeldurchführung fluchten. Danach wird das Gehäuse zugeklappt, wobei das Kabel wie bei den starren 90°-Kabelverschraubungen rechtwinklig gebogen wird.
Nachteil dieser beiden Kabelverschraubungsarten ist die starke Biegebeanspruchung des durchgeführten Kabels, und dessen mühsamer Durchzug über 90° bzw. die aufwendige Herstellung des Klappmechanismus.
Aufgabe der Erfindung ist es, die Kabelbeanspruchung zu verringern und den Kabeldurchzug bei mittlerem Herstellaufwand zu erleichtern.
Lösung dieser Aufgabe ist eine Winkel-Kabelverschraubung gemäß Anspruch 1 bzw. 2.
Vorteil dieser Lösung ist bei einer Kabelumlenkung von 90° der durch den mindestens einen Zwischenabschnitt, vorzugsweise einen Mittelabschnitt, des Gehäuses bewirkte kleinere Krümmung der verlängerten viertelkreisförmigen Kabelbiegung bzw. die einfache Trennbarkeit der zwei Gehäusehälften, durch die das Kabel in zwei Einzelschritten gesteckt werden kann, worauf diese beiden Hälften wieder vereinigt werden können.

Bei einer Reihe bevorzugter Ausführungsformen der erfindungsgemäßen Winkel-Kabelverschraubung ist diese gemäß Anspruch 3 so daß nach dem Befestigen ihrer einen Hälfte am Gerätegehäuse und dem Durchzug des Kabels durch beide Hälften sowie deren Verbindung miteinander die am Kabel festzuklemmende andere Hälfte in die Richtung gedreht werden kann, aus welcher das Kabel am Gerätegehäuse ankommt, ausgestaltet.
Weitere vorteilhafte Ausgestaltungen der erfindungsgemäßen Winkel-Kabelverschraubung, insbesondere durch eine Rasteinrichtung an der Drehverbindung der beiden Gehäusehälften und/ oder durch eine Schnappverbindung derselben, ergeben sich aus den Ansprüchen 4 bis 10.
Es sind zwar aus der DE-A 36 14 198 und der GB-A-2 253 458 Winkel-Kabelverschraubungen gemäß Oberbegriff des Anspruches 1 mit nicht mehr als zwei Gehäuseabschnitten bekannt, nämlich mit genau zwei Endabschnitten für den Ein- bzw. Austritt des Kabels. Diesen Verschraubungen fehlt aber folglich mindestens ein Zwischenabschnitt des Gehäuses, insbesondere ein Mittelabschnitt desselben, welcher bewirkt, daß das Kabel nach seinem Durchzug nicht an einer Stelle um 90°, sondern schonend an mindestens zwei Stellen um je mehr als 90° gebogen ist. - Bei den zwei bekannten Verschraubungen stoßen die beiden auf Gehrung geschnittenen Endabschnitte derart zusammen, daß sie zum geraden Durchführen des Kabels vorübergehend kolinear angeordnet werden können, danach aber im rechten Winkel zueinander angeordnet sind, falls kein Winkel zwischen 90° und 180° gewählt wird, der aber insgesamt keine rechtwinklige Kabelführung ergäbe.

Im Folgenden ist die Erfindung anhand mehrerer durch die Zeichnung beispielhaft dargestellter Ausführungsformen der erfindungsgemäßen Winkel-Kabelverschraubung im einzelnen erläutert. Es zeigt:
- Fig. 1a bis c: je eine zur Hälfte zentral Längsgeschnittene bzw. in Ansicht gezeigte Variante einer ersten Ausführungsform
- Fig. 2: eine Alternative der ersten Ausführungsform in gleicher Darstellung

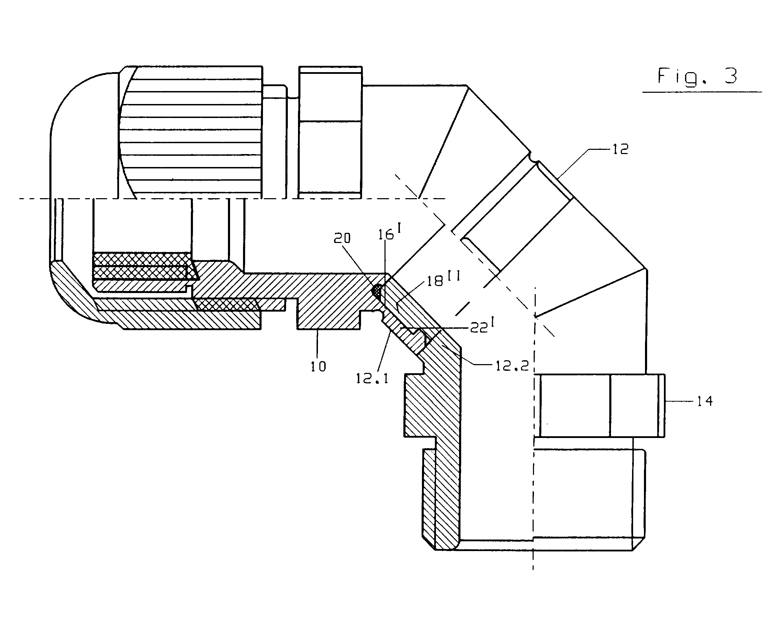

- Fig. 3: eine zweite Ausführungsform in gleicher Darstellung

Soweit die gezeigten Winkel-Kabelverschraubungen übereinstimmen, sind für gleiche oder einander entsprechende Teile gleiche Bezugszahlen verwendet.

Die in ihrer linken oder oberen Hälfte weitgehend dem Gebrauchsmuster 92 04 256 (Jacob) nachgebildeten Ausführungsformen weisen je ein Gehäuse mit einem linken End-, einem einzigen mittleren Zwischen- und einem unteren Endabschnitt 10, 12 bzw. 14 auf, die gerade Bohrungen besitzen, deren Achsen einander paarweise unter 120° stumpfwinklig schneiden, so daß sich insgesamt eine rechtwinklige, schwach gekrümmte Umlenkung des nicht gezeigten Kabels ergibt.
Der mittlere Zwischenabschnitt 12 besteht aus zwei Teilen, nämlich aus einem radial äußeren Teil 12.1, das einstückig mit dem linken Endabschnitt 10 ausgebildet ist, und aus einem koaxialen, radial inneren Teil 12.2, das einstückig mit dem unteren Endabschnitt 14 ausgebildet ist, so daß zwei Hälften 10-12.1 bzw. 14-12.2 des Gehäuses vorhanden sind, die in Richtung der mittleren Bohrungsachse zusammengesteckt und wieder getrennt werden können.
Eine kombinierte Dreh- und Schnappverbindung der beiden gegenseitig zu verriegelnden Teile 10.1 bzw. 10.2 des mittleren Zwischenabschnitts und damit der beiden Gehäusehälften 10-12.1 bzw. 14-12.2 ist mittels mehrerer gleichmäßig auf den Umfang der Bohrung des Zwischenabschnitts 10 verteilter, achsparalleler federnder Zungen 16 eines Teils 12.2 desselben und mittels einer Ringfläche 18 seines anderen Teiles 12.1 gebildet - wie, wird noch beschrieben werden.
Außer einer nicht gezeigten Rasteinrichtung an der Drehverbindung zwecks Arretierung der Gehäusehälften in einer bestimmten Drehlage zueinander, derart, daß der von beiden Hälften gebildete Raumwinkel eben ist, ist ferner ein radial gefaßter, axial eingeklemmter 0-Ring 20 zur Abdichtung der Gehäusefuge an der Teilungsstelle des Zwischenabschnitts 10 vorgesehen.

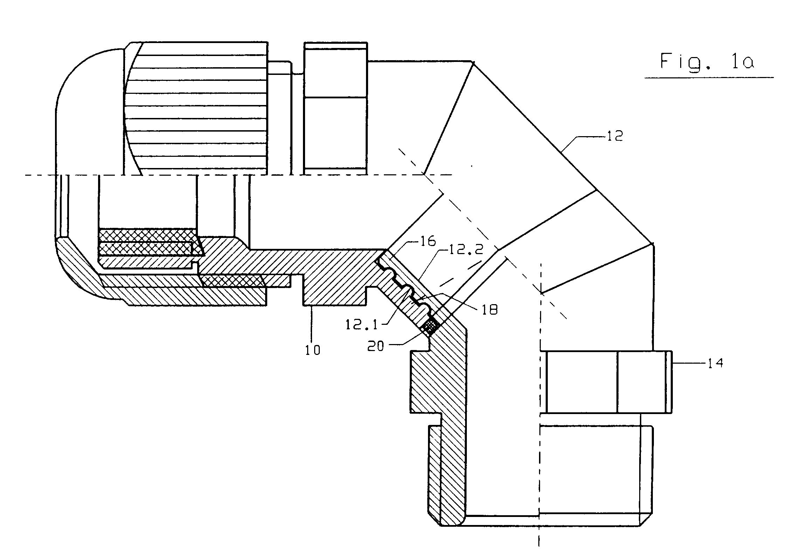

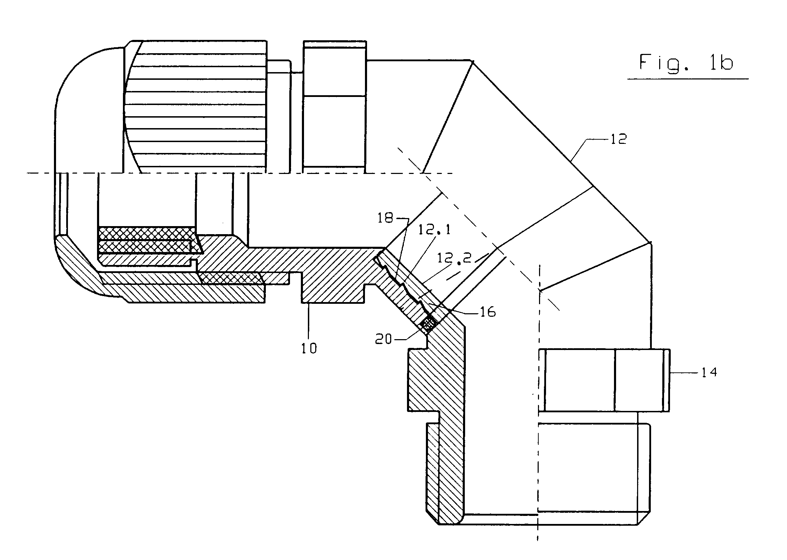

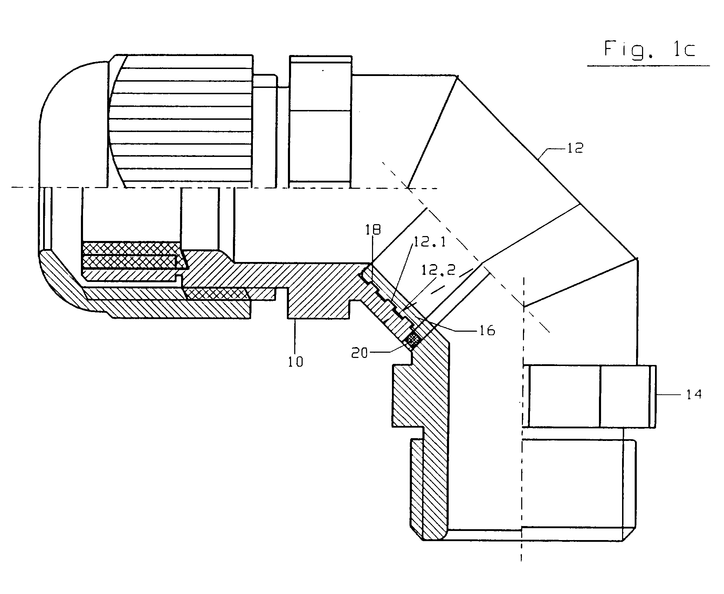

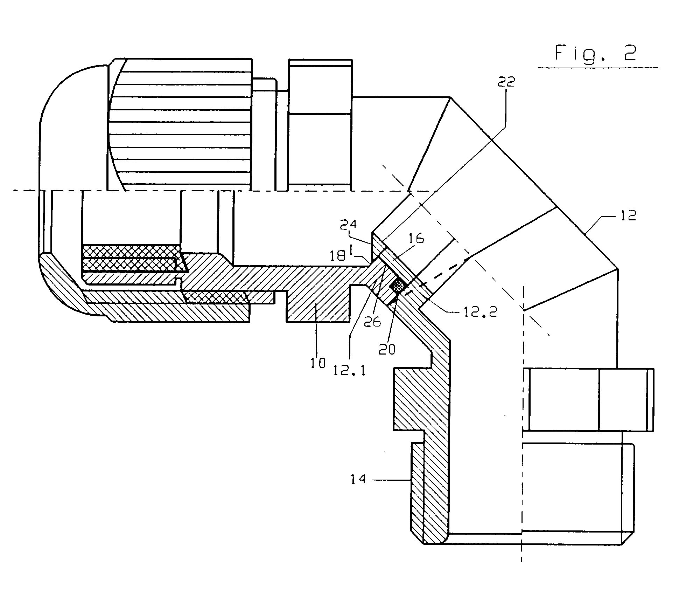

Allen Varianten und Alternativen der ersten Ausführungsform ist gemeinsam, daß die parallelen Zungen 16 radial innen liegen.
Bei diesen Varianten umfaßt gemäß Fig. 1 der im großen und ganzen zylindrische Teil 12.1 des Zwischenabschnitts mit seiner inneren, sich axial erstreckenden Ringfläche 18 - die in Fig. la mittels halbkreisförmig profilierter erhabener Ringe, in Fig. 1b mittels sägezahnförmig profilierter erhabener Ringe und in Fig. 1c mittels rechteckig profilierter erhabener Ringe sowie jedenfalls mittels die Ringe trennender Grundflächenabschnitte gebildet ist - die entsprechend profilierten Vertiefungen der Zungen 16.
Ein axialer Anschlag beim Zusammenstecken der beiden Gehäusehälften ergibt sich gleichzeitig durch das Zusammenstoßen der freien Zungenenden und der Fassung des 0-Ringes 20 an der einen bzw. anderen Hälfte.
Bei der Alternative sind gemäß Fig. 2 an den freien Zungenenden z.B. vier Haken 22 ausgeformt, die eine unterbrochene konische Mantelfläche 24 bilden und die hier in einer Radialebene liegende, sich also radial erstreckende Ringfläche 18' hintergreifen. Dabei liegen die im Beispiel vier Zungen 16 radial nach außen entspannt an einer kreiszylindrischen Fläche 26 des radial äußeren Zwischenabschnitt-Teiles 12.1 an.

Die zweite Ausführungsform entspricht im Verhakungsprinzip der Alternative (siehe Fig. 2) der ersten und unterscheidet sich von ihr hauptsächlich dadurch, daß die z. B. vier Zungen 16' mit Haken 22' hier am anderen Zwischenabschnitt-Teil 12.1 in umgekehrter axialer Richtung und radial außen angeordnet sind, wobei die Ringfläche 18" am Zwischenabschnitt-Teil 12.2 als vertiefte Außenschulter ausgebildet ist und die im Beispiel vier Haken 22' radial außen bündig an diesen Teil 12.2 anschließen.
Der 0-Ring hat den Platz ebenfalls gewechselt und liegt nun an den Wurzeln der Zungen 16'.

## Patentansprüche

1. Gewinkelte Kabeldurchführung für elektrotechnische Geräte (Winkel-Kabelverschraubung), mit einem Gehäuse, das wenigstens zwei Abschnitte (10 und 14) mit je einer durchgehenden Bohrung aufweist, deren Achsen einander zumindest nach der Montage schneiden, dadurch **gekennzeichnet**, daß die zwei Endabschnitte (10 und 14) für den Ein- bzw. Austritt des Kabels mittels mindestens eines Zwischenabschnittes (12), vorzugsweise eines Mittelabschnittes (12), miteinander verbunden sind, welcher stumpfwinklig an die beiden benachbarten Abschnitte (10 und 14) anschließt und die Kabelbiegung zur Verkleinerung ihrer Krümmung wesentlich verlängert.

2. Kabelverschraubung nach Anspruch 1, dadurch gekennzeichet, daß einer der Zwischenabschnitte (12) geteilt ist und seine zwei Teile (12.1 und 12.2) trennbar miteinander verbunden sind.

3. Kabelverschraubung nach Anspruch 2, gekennzeichnet durch eine Drehverbindung der beiden Teile (12.1 und 12.2) jenes Zwischenabschnittes (12), wobei die Drehachse mit der Bohrungsachse dieses vereinigten Abschnittes (12) zusammenfällt.

4. Kabelverschraubung nach Anspruch 2 oder 3, gekennzeichnet durch eine lösbare Verriegelung (Schnappverbindung)der beiden Teile (12.1 und 12.2) des Zwischenabschnittes (12) aneinander.

5. Wasserdichte Kabelverschraubung nach Anspruch 4, mit einem Dichtungsring (20), der eine Bohrungsachse umkreist, dadurch **gekennzeichnet**, daß der Dichtungsring (20) im Bereich der Verriegelung angeordnet ist.

6. Kabelverschraubung nach einem der Ansprüche 3 bis 5, dadurch gekennzeichnet, daß die Drehverbindung mit einer Rasteinrichtung versehen ist, die wirksam ist, wenn die Bohrungsachsen der beiden benachbarten Abschnitte (10 und 14) und des sie verbindenden Zwischenabschnitts (12) koplanar sind.

7. Kabelverschraubung nach einem der Ansprüche 4 bis 6, dadurch gekennzeichnet, daß die Verriegelung an einem (12.2) der beiden Teile (12.1 und 12.2) des Zwischenabschnitts (12), vorzugsweise radial innen, auf den Umfang der Bohrung verteilte profilierte Zungen (16) und am anderen Teil (12.1) dieses Abschnitts (12) eine Ringfläche (18) komplementären Profils aufweist.

8. Kabelverschraubung nach Anspruch 7, dadurch gekennzeichnet, daß die übereinstimmenden Profile jeder Zunge (16) bzw. der Ringfläche (18) achsparallel periodisch so geformt sind, daß eine formschlüssige Verbindung der kraftschlüssig an die Ringfläche gelegten Zungen (16) zu dieser besteht.

9. Kabelverschraubung nach Anspruch 8, dadurch gekennzeichnet, daß das ungerade Profil der Ringfläche (18) durch axial aufeinanderfolgende gleiche, halbkreisförmige oder rechteckige oder sägezahnförmige Erhebungen gebildet ist.

10. Kabelverschraubung nach Anspruch 7 oder 8, dadurch gekennzeichnet, daß die Zungen (16) mit vorzugsweise radial außen liegenden Haken (22)versehen und die Ringfläche (18) als Gehäuseschulter ausgebildet sind.

## Claims

1. An angled cable passage for electrotechnical devices (angled threaded cable union) with a housing which has at least two sections (10 and 14) each with a through bore the axes of which intersect at least after installation, **characterized in** that the two end sections (10 and 14) for inlet and outlet of the cable are linked with each other by at least one intermediate section (12), preferrably a central section (12) which abuts on the two neighbouring sections (10 and 14) in an obtuse angle and thus considerably elongates the cable bend in order to flatten its curve.

2. A threaded cable union according to claim 1 characterized in that one of the intermediate sections (12) is divided and its two parts (12.1 and 12.2) are separably connected with each other.

3. A threaded cable union according to claim 2 characterized by a rotatable connection of the two parts (12.1 and 12.2) of said intermediate section (12) whereby the rotation axis coincides with the bore axis of the united section (12).

4. A threaded cable union according to claims 2 or 3 characterized by a releasable locking (catch lock) of the two parts (12.1 and 12.2) of the intermediate section (12).

5. A water-tight cable union according to claim 4 with a sealing ring (20) which circles a bore axis characterized in that the sealing ring (20) is located in the locking area.

6. A threaded cable union according to one of claims 3 to 5 characterized in that the rotatable connection has a catch which becomes effective when the bore axes of the two neighbouring sections (10 and 14) and the intermediate section (12) connecting them are coplanar.

7. A threaded cable union according to one of claims 4 to 6 characterized in that the locking at one (12.2) of the two parts (12.1 and 12.2) of the intermediate section (12) preferrably radially inside, has profiled tongues (16) distributed over the circumference of the bore, and that the other part (12.1) of said section (12) has a ring surface (18) of complementary profile.

8. A threaded cable union according to claim 7 characterized in that the coinciding profiles of each tongue (16) respectively the ring surface (18) are periodically axis parallel formed in a way that the tongues (16) in frictional connection with the ring surface generate a form-closed connection with said ring surface.

9. A threaded cable union according to claim 8 characterized in that the irregular profile of the ring surface (18) is formed by axially successive equal semicircular or rectangular or saw-tooth projections.

10. A threaded cable union according to claims 7 or 8 characterized in that the tongues (16) are provided with preferrably radially outside located hooks (22) and the ring surface (18) is formed as a shoulder of the housing.

## Revendications

1. Passe-câble angulaire à vis pour des appareils électrotechniques avec un boîtier consistant en au moins deux parties (10 et 14) chacune avec alésage traversant dont les axes se croisent au moins après le montage,
**caractérisé en ce que** les deux parties extrèmes (10 et 14) pour l'entrée et la sortie du câble sont liées par au moins une partie intermédiaire (12), préférablement une partie centrale (12) qui touche aux deux parties avoisinantes (10 et 14) à angle obtus et prolonge ainsi la courbure du câble pour réduire sa flexion considérablement.

2. Passe-câble à vis suivant la revendication 1 caractérisé en ce que l'une des parties intermédiaires (12) est divisée et que ses deux sections (12.1 et 12.2) sont connectées de façon séparable.

3. Passe-câble à vis suivant la revendication 2 caractérisé en ce que les deux sections (12.1 et 12.2) de la partie intermédiaire (12) sont connectées de façon tournable et que l'axe de rotation coincide avec l'axe de l'alésage de cette partie réunie (12).

4. Passe-câble à vis suivant les revendications 2 ou 3 caractérisé par un verrouillage desserrable (verrouillage encliquetable) des deux sections (12.1 et 12.2) de la partie intermédiaire (12).

5. Passe-câble à vis étanche suivant la revendication 4 avec une bague d'étanchéité (20) autour d'une axe d'alésage caractérisé en ce que la bague d'étanchéité (20) se trouve dans la zone de verrouillage.

6. Passe-câble à vis suivant l'une des revendications 3 à 5 caractérisé en ce que la connexion tournante est munie d'une encliquetage qui prend effet quand les axes des alésages des deux parties avoisinées (10 et 14) et de la partie intermédiaire (12) qui les lie sont co-planaires.

7. Passse-câble à vis suivant l'une des revendications 4 à 6 caractérisé en ce que le verrouillage possède sur l'une (12.2) des deux sections (12.1 et 12.2) de la partie intermédiaire (12) préférablement radialement à l'intérieur, des languettes profilées (16) distribuées sur la circonférence de l'alésage, et sur l'autre section (12.1) de cette partie (12) une surface d'anneau (18) profilée complémentairement.

8. Passe-câble à vis suivant la revendication 7 caracterisé en ce que les profils concordants de chague languette (16) respectivement de la surface d'anneau (18) sont formés périodiquement parallel à l'axe d'une façon à créer une connection à engagement positif entre les languettes (16) qui touchent la surface d'anneau par adhérence et cette dernière.

9. Passe-câble à vis suivant la revendication 8 caractérisé en ce que le profil irrégulier de la surface d'anneau (18) est formé par des bosses semicirculaires ou rectangulaires ou en dents de scie identiques qui se succèdent axialement.

10. Passe-câble à vis suivant la revendication 7 ou 8 caractérisé en ce que les languettes (16) sont munies de crochets (22) situés de préférence radialement à l'éxtérieur et que la surface d'anneau (18) est conçu comme épaule de boîtier.
